# DEMANDE DE BREVET EUROPEEN

(11) **EP 0 848 905 A1**
(43) Date de publication de la demande: **24.06.1998**
(21) Numéro de dépôt: 97460050.4
(22) Date de dépôt: 09.12.1997
(51) Int. Cl.: A01K 1/02, A01K 1/00

(54) **Elément de construction formant paroi latérale d'une case pour animaux**

(30) Priorité: 11.12.1996 FR 9615464
(71) Demandeur: I-TEK SA, F-22250 Tremeur (FR); Technel SA, 22350 Yvignac (FR)
(72) Inventeur: Lesnard, Pierre, 22250 Tremeur (FR)
(74) Mandataire: Maillet, Alain

(57) **Abrégé**

La présente invention concerne un élément de construction formant paroi latérale d'une case pour animaux, notamment d'une case gestante pour porcherie, du type qui est constitué de deux montants (31 et 32) sur lesquels viennent se fixer des moyens 33 formant la paroi latérale proprement dite, lesdits deux montants (31 et 32) étant prévus pour être fixés au sol.

L'un au moins des deux montants (31 et 32) est prévu pour pouvoir être fixé sur un élément (17) courant transversalement à une hauteur supérieure à celle d'un homme.

## Description

La présente invention concerne un élément de construction formant paroi latérale d'une case pour animaux, notamment d'une case gestante pour porcherie.

Dans les élevages en porcherie, chaque truie en gestation est logée dans une case qui est constituée de deux éléments de construction constituant respectivement les parois latérales de ladite case. A l'avant desdites deux parois, est fixée l'auge permettant à la truie de se nourrir alors qu'à l'arrière est fixé un mécanisme de porte permettant à la truie de pouvoir entrer dans la case et d'y rester. Ce type de case est couramment appelée dans le domaine de la technique case gestante ou gestante.

Dans une porcherie, les cases gestantes sont disposées adjacentes les unes aux autres formant des rangées de cases. Ainsi, l'élément de construction d'une case fait office de paroi latérale pour la case elle-même mais également pour la case directement adjacente.

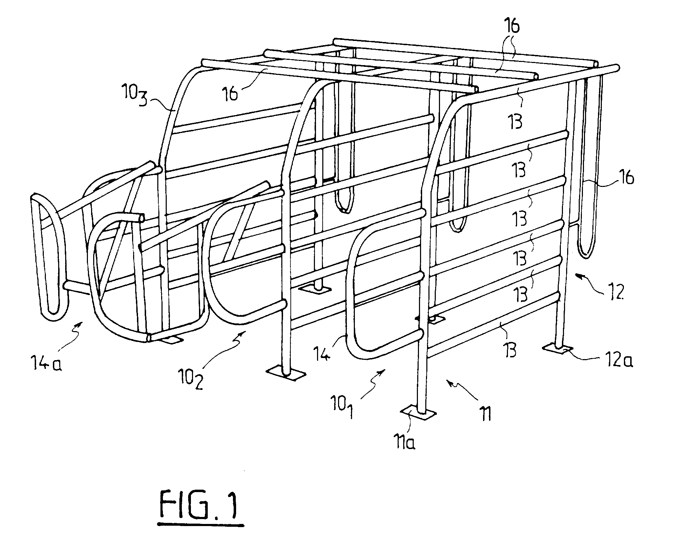

On a représenté à la Fig. 1 deux cases gestantes adjacentes du type connu.

Sur cette Fig. 1, on voit trois éléments de construction identiques 10₁ à 10₃ qui sont disposés côte à côte de manière à former entre eux des espaces qui constitueront les espaces intérieurs des deux cases adjacentes. On voit que l'élément de construction central 10₂ forme à la fois les parois latérales gauche et droite respectivement des cases droite et gauche.

Chaque élément de construction 10 est constitué de deux montants Il et 12 sur lesquels viennent se fixer des tubes longitudinaux 13 formant le panneau qui constitue la paroi latérale proprement dite. A l'avant de chaque élément 10 est fixé un arceau 14 prévu pour recevoir un point latéral d'ancrage d'un mécanisme de porte 14a, par exemple mais non nécessairement constitué par une porte basculante. A l'arrière, est également fixé un arceau 15 qui est prévu pour recevoir un point d'ancrage d'une auge (non représentée pour la clarté du dessin).

Les deux montants 11 et 12 de chaque élément de construction 10 présentent des pattes 11a et 12a pour leur fixation au sol. Pour consolider la fixation des éléments de construction 10 sur le sol, sont généralement prévues des traverses 16, le plus souvent au nombre de trois, fixées sur les barres supérieures 13, soit par boulonnage soit par serrage au moyen de colliers. Ces traverses 16 sont constituées de longs tubes fixés sur l'ensemble des éléments de construction d'une rangée de cases.

Du fait d'un nombre d'interventions accrues sur la truie en gestation, lié à une réglementation de plus en plus rigoureuse en ce qui concerne l'hygiène, obligeant notamment à des vaccinations sur l'animal mais aussi à de nouvelles méthodes d'élevage, par exemple l'élevage par insémination, l'éleveur est très souvent obligé d'entrer dans la case. Il le fait en général en passant au-dessus de la porte qui ferme la case à l'avant. Là, il peut intervenir sur la partie arrière de l'animal.

Mais, le problème se pose lorsqu'il veut intervenir sur la partie avant de l'animal. En effet, les traverses sont disposées à une hauteur qui est, selon les modèles de cases, comprise entre 80 et 120 cm, c'est-à-dire à la hauteur des panneaux latéraux de la case. Ces traverses empêchent l'éleveur d'intervenir dans une position normale et relativement confortable sur la partie avant de la truie car elles se trouvent à la hauteur de son buste.

Le but de la présente invention est donc de présenter un élément de construction d'une case qui permette de résoudre ce problème et dont la structure est telle qu'elle permette à l'éleveur de rentrer debout dans la case sur toute la longueur de celle-ci.

Pour ce faire, un élément de construction selon l'invention est caractérisé en ce que l'un au moins des deux montants est prévu pour pouvoir être fixé sur un élément courant transversalement à une hauteur supérieure à celle d'un homme.

Selon une autre caractéristique de l'invention, les deux montants sont prévus pour pouvoir être fixés sur des éléments courant transversalement à une hauteur supérieure à celle d'un homme.

Selon une autre caractéristique de l'invention, les moyens formant la paroi latérale de ladite case sont constitués de barres verticales fixées à leurs parties basse et haute sur des barres horizontales supérieure et inférieure dont les extrémités sont respectivement fixées sur lesdits deux montants.

Avantageusement, ledit élément comporte des moyens pourvus de point d'ancrage pour recevoir un mécanisme de fermeture par porte. De même, il comporte des moyens pourvus de point d'ancrage pour recevoir une auge.

La présente invention concerne également une installation de cases gestantes adjacentes pour porcherie, ladite installation étant constituée d'une pluralité d'éléments de construction identiques disposés côte à côte de manière à former entre eux des espaces constituant les espaces intérieurs desdites cases.

Selon une caractéristique principale de cette installation, chaque élément de construction est constitué de deux montants sur lesquels viennent se fixer des moyens formant la paroi latérale proprement dite d'une case, lesdits deux montants étant prévus pour être fixés au sol. Ladite installation est caractérisée en ce qu'elle comprend un élément courant transversalement à une hauteur supérieure à celle d'un homme et en ce que l'un au moins des deux montants de chaque élément de construction est prévu pour pouvoir être fixé sur ledit élément.

Selon une autre caractéristique de l'invention, elle comprend deux éléments courant transversalement à une hauteur supérieure à celle d'un homme et lesdits deux montants de chaque élément de construction sont prévus pour pouvoir être respectivement fixés sur lesdits éléments.

Avantageusement, au moins l'un des éléments est prévu pour pouvoir supporter la ou les canalisations servant à la distribution d'aliment dans l'auge de chaque case.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en perspective de deux cases selon l'état de la technique connue,
la Fig. 2 est une vue en plan de devant d'une installation de cases gestantes adjacentes selon l'invention,
la Fig. 3 est une vue en plan d'un élément de construction selon l'invention, et
la Fig. 4 est une vue en plan d'un élément de construction selon un autre mode de réalisation de l'invention.

La Fig. 1 a été précédemment décrite et ne le sera donc pas de nouveau.

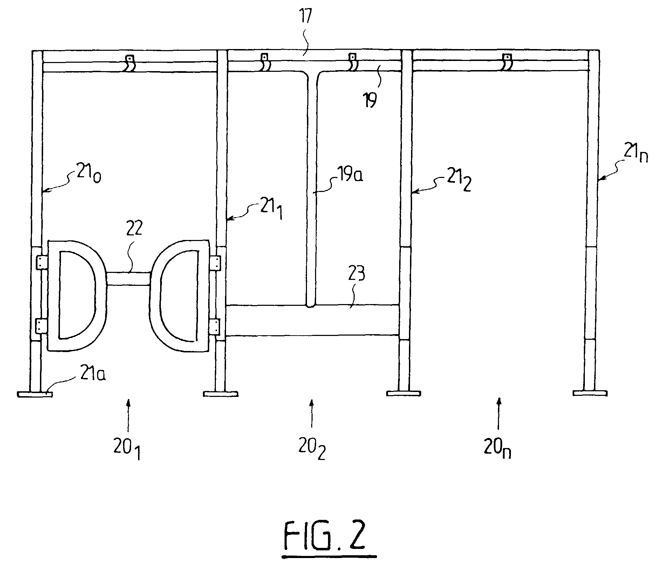

La Fig. 2 montre une installation de cases gestantes pour porcherie qui est composée de n cases 20₁ à 20ₙ disposées adjacentes les unes aux autres de manière à former une rangée de cases. Chaque case 20ᵢ (i = 1 à n) est formée par deux éléments de construction 21(_{i - 1}) et 21ᵢ identiques montés côte à côte de manière à former entre eux des espaces qui constituent l'espace intérieur de la case 20ᵢ. Chaque élément de construction 21 est pourvu de pieds 21a qui permettent sa fixation au sol. L'arrière de chaque case 20ᵢ est fermée par une porte 22 prévue pour permettre à la truie d'entrer dans la case. La porte 22 est par exemple pourvue d'un mécanisme de fermeture basculant A l'avant de chaque case 20ᵢ, est prévue une auge dans laquelle l'animal peut se nourrir.

Pour des raisons de clarté de la Fig. 2, on a représenté la case 20₁ avec seulement une porte 22 et la case 20₂ avec seulement une auge 23, mais on comprendra que chaque case 20ᵢ comprend à la fois une porte 22 et une auge 23.

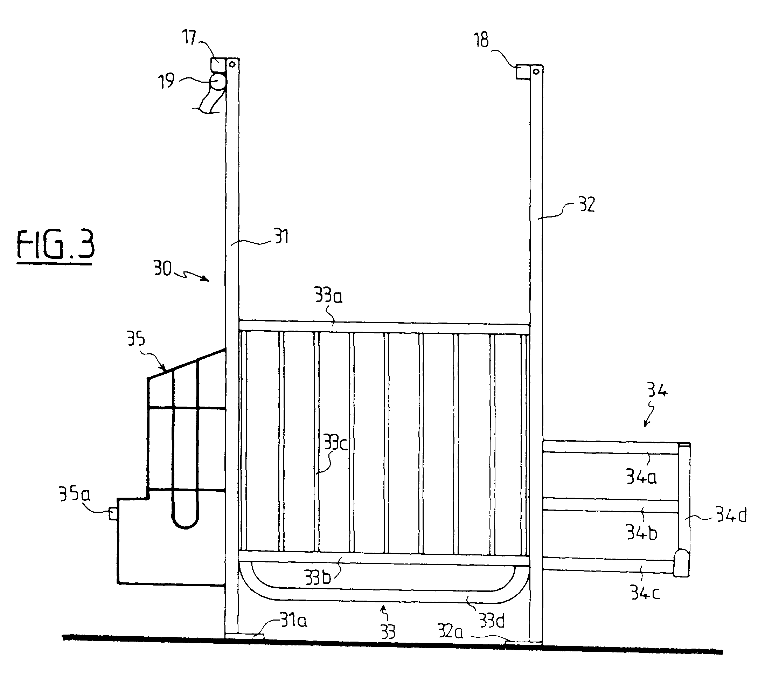

Chaque élément de construction 21ᵢ est prévu pour être fixé sur une traverse 17 ou deux traverses 17 ou 18, comme cela va être décrit en relation avec la Fig. 3. La traverse 17 ou l'une au moins de ces traverses 17 et 18 supporte la canalisation 19 amenant la nourriture dans l'auge 23 de chaque case. Pour ce faire, de la canalisation 19, part une descente 19aᵢ en direction de l'auge 23 de la case 20ᵢ correspondante.

On a représenté à la Fig. 3 un élément de construction 30 selon un premier mode de réalisation de l'invention. Il est essentiellement constitué de deux montants 31 et 32 entre lesquels est fixé un panneau 33 destiné à former les parois latérales respectives des deux cases adjacentes qu'il délimite. A leurs parties basses, les montants 31 et 32 comportent des pattes 31a et 32a destinées à être fixées sur le sol, au moyen, par exemple, de boulons.

Dans l'exemple de réalisation représenté, le panneau 33 est constitué de deux tubes parallèles entre eux 33a et 33b qui sont destinés à se trouver horizontaux en utilisation normale et dont leurs extrémités sont respectivement fixées aux montants 31 et 32. Entre les deux tubes 33a et 33b, sont soudés plusieurs tubes perpendiculaires 33c, destinés être verticaux en utilisation normale, qui sont parallèles entre eux et équidistants. Sous le tube inférieur 33b, est prévu un tube sensiblement parallèle 33d.

Sur un des montants 32, est fixé un ensemble de tubes 34 qui est destiné à former l'enceinte à l'arrière de la case et qui est donc prévu pour recevoir un système de fermeture par porte. Cet ensemble 34 est ici constitué de trois tubes 34a, 34b et 34c parallèles entre eux et reliés, à leurs extrémités libres, par une barre 34d.

Sur l'autre montant 31, est fixé un autre ensemble de tubes 35 qui est destiné à recevoir une auge (non représentée).

Selon l'invention, les montants 31 et 32 sont prévus pour pouvoir être fixés sur des traverses 17 et 18 qui courent transversalement dans l'installation à une hauteur telle qu'un homme puisse passer dessous. Avantageusement les traverses 17 et 18 sont à une hauteur d'environ 2 mètres.

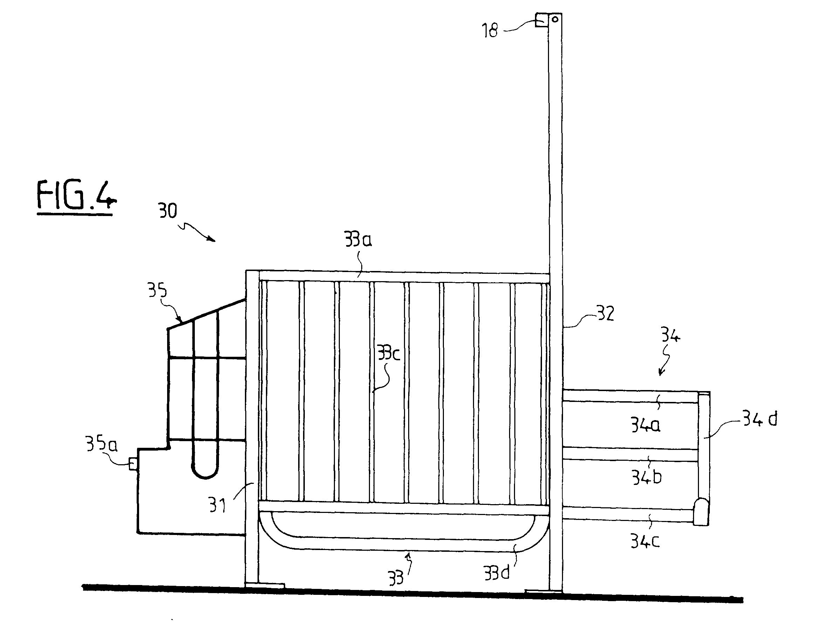

La Fig. 4 montre un second mode de réalisation de l'invention dans laquelle les mêmes éléments portent les mêmes références. Selon ce mode de réalisation, seul le montant 32 est prévu pour être fixé sur une traverse 17 à une hauteur telle qu'un homme puisse passer dessous. Le montant 31 est quant à lui à la hauteur de la partie supérieure du panneau 33. Bien que le montant fixé sur la traverse 17 soit avantageusement le montant arrière 32, il pourrait s'agir, dans un autre mode de réalisation non représenté, du montant avant 31. Dans ce cas, le montant 32 pourrait être de hauteur plus faible.

Comme on peut le constater sur les Figs. 3 et 4, sur la traverse 17 est fixée, par exemple au moyen de colliers appropriés, la canalisation 19 de distribution de l'aliment aux auges des cases.

Une barre 35a peut être fixée sur l'ensemble 35 pour faciliter le montage d'une auge.

## Revendications

1. Elément de construction formant paroi latérale d'une case pour animaux, notamment d'une case gestante pour porcherie, du type qui est constitué de deux montants (31 et 32) sur lesquels viennent se fixer des moyens 33 formant la paroi latérale proprement dite, lesdits deux montants (31 et 32) étant prévus pour être fixés au sol, caractérisé en ce que l'un au moins des deux montants (31 et 32) est prévu pour pouvoir être fixé sur un élément (17) courant transversalement à une hauteur supérieure à celle d'un homme.

2. Elément de construction selon la revendication 1, caractérisé en ce que les deux montants (31 et 32) sont prévus pour pouvoir être fixés sur des éléments (17 et 18) courant transversalement à une hauteur supérieure à celle d'un homme.

3. Elément de construction selon la revendication 1 ou 2, caractérisé en ce que les moyens (33) formant la paroi latérale de ladite case sont constitués de barres verticales (33c) fixées à leurs parties basse et haute sur des barres horizontales supérieure (33a) et inférieure (33b) dont les extrémités sont respectivement fixées sur lesdits deux montants (31 et 32).

4. Elément de construction selon une des revendications précédentes, caractérisé en ce qu'il comporte des moyens (34) pourvus de point d'ancrage pour recevoir un système de fermeture par porte.

5. Elément de construction selon une des revendications précédentes, caractérisé en ce qu'il comporte des moyens (35) pourvus de point d'encrage pour recevoir une auge.

6. Installation de cases gestantes adjacentes pour porcherie, ladite installation étant constituée d'une pluralité d'éléments de construction identiques disposés côte à côte
de manière à former entre eux des espaces constituant les espaces intérieurs desdites cases, chaque élément de construction étant constitué de deux montants (31 et 32) sur lesquels viennent se fixer des moyens (33) formant la paroi latérale proprement dite d'une case, lesdits deux montants (31 et 32) étant prévus pour être fixés au sol, caractérisée en ce qu'elle comprend un élément (17) courant transversalement à une hauteur supérieure à celle d'un homme et en ce que l'un au moins des deux montants (31 et 32) de chaque élément de construction est prévu pour pouvoir être fixé sur ledit élément (17).

7. Installation de cases gestantes adjacentes pour porcherie, ladite installation étant constituée d'une pluralité d'éléments de construction identiques disposés côte à côte
de manière à former entre eux des espaces constituant les espaces intérieurs desdites cases, chaque élément de construction étant constitué de deux montants (31 et 32) sur lesquels viennent se fixer des moyens (33) formant la paroi latérale proprement dite d'une case, lesdits deux montants (31 et 32) étant prévus pour être fixés au sol, caractérisée en ce qu'elle comprend deux éléments (17 et 18) courant transversalement à une hauteur supérieure à celle d'un homme et en ce que lesdits deux montants (31 et 32) de chaque élément de construction sont prévus pour pouvoir être respectivement fixés sur lesdits éléments (17 et 18).

8. Installation selon la revendication 6 ou 7, caractérisée en ce qu'au moins l'un des éléments (17 et 18) est prévu pour pouvoir supporter la ou les canalisations servant à la distribution d'aliment dans une auge de chaque case.
